# EUROPÄISCHE PATENTANMELDUNG

(11) **EP 2 218 866 A1**
(43) Veröffentlichungstag der Anmeldung: **18.08.2010**
(21) Anmeldenummer: 09152325.8
(22) Anmeldetag: 06.02.2009
(51) Int. Cl.: E06B 9/68, H02P 5/46

(54) **Antriebs- und Steuereinrichtung für Rollläden oder Rolltore**

(71) Anmelder: ProVita Verwaltung GmbH, 63584 Gruendau (DE)
(72) Erfinder: Lott, Oswald, D-63584, Gruendau (DE)
(74) Vertreter: Staudt, Armin Walter

(57) **Zusammenfassung**

Um einen Antrieb für die reversierend rotierbare Wickelwelle eines Rollladens bereitzustellen, der sich durch eine hohe Leistung auszeichnet und der dennoch konstruktiv einfach und kostengünstig ist, wird ein außerhalb der Wickelwelle angeordneter Direktantrieb vorgeschlagen, der eine erste Antriebsbaueinheit und eine zweite Antriebsbaueinheit umfasst, die mit einer gemeinsamen Steuereinheit verbunden sind und die jeweils mindestens einen Gleichspannungs-Motor aufweisen, wobei die erste Antriebsbaueinheit im Bereich des einen stirnseitigen Endes der Wickelwelle und die zweite Antriebsbaueinheit im Bereich des anderen stirnseitigen Endes der Wickelwelle angreift und wobei die Motoren von erster und zweiter Antriebsbaueinheit bei Betrieb die Wickelwelle gleichsinnig und synchron rotieren.

## Beschreibung

Die Erfindung betrifft eine Antriebs- und Steuereinrichtung für Rollläden und dergleichen, mit einer reversierend rotierbaren Wickelwelle und einem außerhalb der Wickelwelle angeordneten Direktantrieb.

### Stand der Technik

Rollläden und ähnliche Verdunkelungs- und Schutzeinrichtungen, wie Rolltore, Markisen, Jalousien weisen eine Wickelwelle zum Aufwickeln eines Schließ- oder Schutzelements, wie eines Rollladenpanzers, eines Rolltores, eines Markisentuches oder eines Vorhangs auf. Zum Drehen der Wickelwelle um ihre Längsachse sind Antriebe gebräuchlich, die einen Motor, ein Getriebe, eine Motorsteuerung sowie eine Bedieneinheit zum Schalten des Motors aufweisen. Dabei sind unterschiedliche Bauformen bekannt.

Bei Rollläden, bei denen die Wickelwelle über ein Zugelement, etwa einem Rollladengurt, betätigt wird, werden elektrische Gurtwickler eingesetzt. Dabei wird der Rollladengurt mittels des Gurtwicklers auf- und abgewickelt und dabei gleichzeitig die Wickelwelle rotiert. Bei einem Gurtwickler dieser Art gemäß der DE 20 2005 007 921 U1 ist ein Antrieb für einen Rollladen zum Einbau in den Scheibenzwischenraum von Isolierglasscheiben offenbart, bei dem an beiden Seiten der Wickelwelle jeweils ein Zugorgan vorgesehen ist, von denen eines zum Aufwickeln des Rollladens dient und das andere zum Abwickeln. Jedes der Zugorgane wird mittels eines Elektromotorantriebs angetrieben. Die Elektromotoren haben dabei eine gegensinnige Arbeitsdrehrichtung, so dass der eine das jeweilige Zugorgan zum Aufwickeln antreibt und der andere das andere Zugorgan beim Abwickeln. Der jeweils nicht arbeitende Elektromotor wird durch das ihm zugeordnete Zugorgan mitgedreht und wirkt gleichzeitig als Bremse.

Insbesondere bei schweren Rollläden und Rolltoren wird die Wickelwelle bevorzugt über einen unmittelbar an der Wickelwelle angreifenden Antrieb bewegt. So wird beispielsweise bei dem Antrieb gemäß der DE 697 20 144 T2 ein so genannter Rohrmotor beschrieben, der in der Innenbohrung der hohlzylindrischen Wickelwelle eingesetzt wird, und diese über einen an die Innenbohrung der Wickelwelle angepassten Mitnehmer rotiert. Der Rohmotor hat den Vorteil, dass er seitlich zur Wickelwelle keinen zusätzlichen Raum beansprucht.

Rohrmotore sind in der Regel als Wechselstrommotoren mit hoher Drehzahl ausgeführt. Die hohe Drehzahl erfordert ein Untersetzungsgetriebe mit einem großen Untersetzungsverhältnis, so dass im Regelfall mehrere Getriebestufen hintereinander angeordnet werden müssen, was wegen des begrenzten Platzes innerhalb der Wickelwelle aufwändige Konstruktionen erfordert. Rohrmotore sind daher vergleichsweise teuer.

Die vorliegende Erfindung bezieht sich auf eine andere Bauform einer Antriebsbaueinheit mit unmittelbar an der Wickelwelle angreifendem Antrieb, die im Folgenden auch als "Direktantrieb" bezeichnet wird. Dabei ist ein Antrieb vorgesehen, der außerhalb der Wickelwelle angeordnet ist und an einem stirnseitigen Ende derselben angreift. Dabei sind Motor und Untersetzungsgetriebe in einem Gehäuse untergebracht ist, das an der Stirnseite der Wickelwelle verdrehsicher befestigt ist. Das Untersetzungsgetriebe umfasst in der Regel ein selbsthemmendes Schneckengetriebe, so dass zum Halten des Rollladenpanzers keine zusätzlichen Maßnahmen erforderlich sind.

Zwischen der Wickelwelle und deren Wandlager steht jedoch in der Regel nur ein schmaler Spalt zur Verfügung. Eine wesentliche Anforderung an einen derartigen Direktantrieb besteht somit darin, eine Unterbringung der Antriebsbaueinheit innerhalb des Rollladenkastens ohne bauliche Änderungen zu ermöglichen, und gleichzeitig eine ausreichend hohe Zugleistung zur Verfügung stellen zu können.

Um dies zu gewährleisten, wird in der WO 2008/006758 A1 ein Direktantrieb vorgeschlagen, bei dem für den Antrieb der Wickelwelle ein besonders großes Antriebszahnrad vorgesehen ist, um so eine Rotation der Wickelwelle mit einem günstigen Hebelverhältnis zu bewerkstelligen. Dadurch werden die Anforderungen an die bereitzustellende Motorleistung und damit an die Baugröße des Motors verringert.

Ein anderer Lösungsansatz für das Platzproblem bei Direktantrieben dieser Gattung ist aus der WO 2005/088062 A1 bekannt. Darin wird vorgeschlagenen, ein stirnseitig der Wickelwelle angeordnetes Antriebsgehäuse vorzusehen, in dem zwei Elektromotore mit kleiner Baugröße angeordnet sind, die über ein gemeinsames Untersetzungsgetriebe die Wickelwelle antreiben. Die kompakten Motoren verfügen konstruktionsbedingt über eine relativ geringe Leistung. Das gemeinsame Getriebe erfordert zudem eine aufwändige Mechanik.

### Technische Aufgabenstellung

Der vorliegenden Erfindung liegt somit die Aufgabe zugrunde, für eine Wickelwelle einen Antrieb zur Verfügung zu stellen, der sich durch hohe Leistung auszeichnet, und der dennoch kompakt, konstruktiv einfach und kostengünstig ist.

Diese Aufgabe wird ausgehend von der eingangs genannten Antriebs- und Steuereinheit erfindungsgemäß dadurch gelöst, dass der außerhalb der Wickelwelle angeordnete Direktantrieb eine erste und eine zweite Antriebsbaueinheit umfasst, wobei die Antriebsbaueinheiten mit einer gemeinsamen Steuereinheit verbunden sind und jeweils mindestens einen Gleichspannungs-Motor und ein mit dem Motor in Antriebsverbindung stehendes Untersetzungsgetriebe aufweisen, wobei die erste Antriebsbaueinheit im Bereich des einen stirnseitigen Endes der Wickelwelle und die zweite Antriebsbaueinheit im Bereich des anderen stirnseitigen Endes der Wickelwelle angreift und wobei die Motoren von erster und zweiter Antriebsbaueinheit bei Betrieb die Wickelwelle gleichsinnig und synchron rotieren.

Die Antriebseinrichtung beruht auf einem Direktantrieb für die Wickelwelle, also einem Antrieb, der zwar an der Wickelwelle unmittelbar angreift, aber im Gegensatz zum Rohrmotor im Wesentlichen außerhalb der Wickelwelle angeordnet ist.

Im Unterschied zu den oben erläuterten Direktantrieben dieser Art ist der Direktantrieb gemäß der Erfindung in zwei räumlich getrennte Antriebsbaueinheiten aufgeteilt, von denen jeweils einer im Bereich eines stirnseitigen Endes der Wickelwelle angreift. Die beiderseits der Wickelwelle angeordneten Antriebsbaueinheiten können dabei gleichzeitig die Endlager für die Wickelwelle zur Verfügung stellen.

Die Motoren der beiden Antriebsbaueinheiten sind elektrisch oder steuerungstechnisch so miteinander verbunden, dass sie im Betrieb die Wickelwelle in gleicher Drehrichtung und mit gleicher Drehzahl rotieren. Einerseits kann auf dieser Art und Weise die erforderliche Antriebsleistung auf beide Enden der Wickelwelle verteilt werden, was den Einsatz kleinerer Motoren ermöglicht. Andererseits kann der auf beiden Seiten der Wickelwelle insgesamt zur Verfügung stehende Raum zur Bereitstellung von Antriebsleistung genutzt werden, so dass im Vergleich zu einer einzelnen Antriebsbaueinheit auch eine deutlich höhere (zum Beispiel die doppelte) Antriebsleistung ohne zusätzlichen Raumbedarf seitlich der Wickelwelle bereitgestellt werden kann. Daher ist die Antriebs- und Steuereinheit gemäß der Erfindung auch zum Heben und Halten von Behängen geeignet, die ansonsten mit einem einzelnen seitlichen Direktantrieb nicht zu bedienen wären, wie beispielsweise besonders großer und schwerer Rollladenpanzer beziehungsweise Garagentore oder industrielle Rolltore.

Dadurch, dass der Direktantrieb zwei komplette Antriebsbaueinheiten mit Motor und Untersetzungsgetriebe umfasst, kann nicht nur die zur Verfügung stehende Zugleistung insgesamt erhöht werden, sondern auch die Leistung zum Halten des Rollladenpanzers beziehungsweise des Rolltores oder eines anderen eines Schließ- oder Schutzelements. Der Einfachheit halber wird die Erfindung im Folgenden anhand eines Rollladens mit Rollladenpanzer erläutert, wobei auch andere Verdunkelungs- und Schließeinrichtungen umfasst sein sollen.

Zur Synchronisation der Motoren werden beide Antriebsbaueinheiten über eine gemeinsame Steuereinheit angesprochen. Die gemeinsame Steuereinheit kann auf mehrere steuerungstechnisch miteinander verbundene Steuermodule verteilt sein. Im einfachsten Fall wird für den Betrieb des Direktantriebes jedoch nur ein Modul für die Steuerung benötigt, das gleichzeitig eine Bedieneinheit zum Schalten der Motoren beinhalten kann. Die gemeinsame Steuer- und Bedieneinheit kann in dem Fall neben den üblichen Bedienelementen zum Aufrollen und Abrollen des Rollladenpanzers zusätzliche Elemente enthalten, wie ein Funk- oder IR-Empfangsmodul, ein Sonnenmodul und dergleichen. Die Bedienelemente sind vorteilhafterweise so angeordnet, dass sie dem Benutzer leicht zugänglich sind. Beispielsweise kann die Steuer- und Bedieneinrichtung auch abnehmbar und über Funk mit den Antriebseinheiten verbunden sein.

Auch nur kurzzeitige asynchrone Drehbewegungen der Motoren führen zu Bremsverlusten oder Torsionen der Wickelwelle und damit zu einem unzureichenden Betrieb. Die Synchronisation der Drehzahl der Motoren kann über die Messung der jeweiligen Drehzahlen, der an den Motoren anliegenden Spannungen oder der jeweiligen Drehmomente erfolgen. Bevorzugt wird jedoch eine Ausführungsform zur Synchronisation der Drehzahlen der Motoren von erster und zweiter Antriebsbaueinheit, bei der eine Synchronisationseinrichtung vorgesehen ist, die eine Messeinrichtung für die fortwährende Messung der von den Motoren aufgenommenen Betriebsströme und eine Regeleinrichtung umfasst, mittels der die Betriebsströme auf ein gemeinsames Niveau eingeregelt werden.

Im Vergleich zur Messung von Drehzahl, Spannung oder Drehmoment ermöglicht die Messung der von den jeweiligen Motoren aufgenommenen Betriebsströme eine ausreichende Synchronisation der Motoren von erster und zweiter Antriebsbaueinheit ohne großen Konstruktions- oder Regelungsaufwand. Die fortwährende Erfassung der von den Motoren aufgenommenen Betriebsströme erfolgt kontinuierlich oder in kurzen Zeitabständen. Die Messdaten werden der Regeleinrichtung zugeführt, die eine Angleichung der Drehzahlen bewirkt. Die Regeleinrichtung ist Teil der gemeinsamen Steuereinheit.

Die Motoren von erster und zweiter Antriebsbaueinheit sind über eine gemeinsame Steuerung verbunden. Davon unabhängig können jeweils separate Netzteile und auch separate Steuereinheiten für die Motoren vorgesehen sein. Bei einer konstruktiv besonders einfachen und daher bevorzugten Ausführungsform der erfindungsgemäßen Antriebs- und Steuereinheit ist vorgesehen, dass die Motoren von erster und zweiter Antriebsbaueinheit elektrisch parallel geschaltet sind.

Die Parallelschaltung erleichtert die Herstellung der Synchronität der Drehzahlen der Motoren, da die Motoren entweder beide gleichzeitig eingeschaltet oder ausgeschaltet sind. Für diese Betriebsweise sind nur ein Netzteil und nur eine Steuereinheit für beide Motoren erforderlich.

In dem Zusammenhang hat es sich auch als besonders günstig erwiesen, wenn die Steuereinheit eine hierarchische Master/Slave-Steuerungsorganisation umfasst, wobei der Motor der ersten Antriebsbaueinheit als Master-Motor und der Motor der zweiten Antriebsbaueinheit als Slave-Motor organisiert ist.

Master/Slave-Schaltungen sind bei Rechnern für die Verwaltung von Laufwerken üblich und auch bei Steckdosenleisten grundsätzlich bekannt. Übertragen auf den erfindungsgemäßen Direktantrieb bedeutet die Master/Slave-Schaltung, dass nur der eine Motor, nämlich der Master-Motor, spezifische Signale betreffend den Betrieb, den Stillstand oder die Drehrichtung an die gemeinsame Steuereinheit liefert. Diese Signale werden an den Slave-Motor weitergegeben, was durch eine Steuerung oder im einfachsten Fall durch elektrische Parallelschaltung der Motoren erreicht wird. Auf diese Weise wird die Abgabe widersprüchlicher Betriebs- oder Drehrichtungssignale an den Motoren zuverlässig verhindert und so Bremswirkungen und Schäden der Wickelwelle vermieden. Davon unabhängig ist die Steuerung der Drehzahl des Slave-Motors zum Zweck der Drehzahl-Synchronisation vorgesehen.

In dem Zusammenhang hat es sich auch als besonders günstig erwiesen, wenn die erste Antriebsbaueinheit mit einer Erfassungseinrichtung zur Wegmessung, zum Stillstand und/oder Notstopp ausgestattet ist, und dass die Steuereinheit mit der ersten Antriebsbaueinheit über eine Steuerleitung verbunden ist, über die Mess- und Steuerdaten der Erfassungseinrichtung übertragen werden.

Die erste Antriebsbaueinheit mit dem Master-Motor umfasst hier ergänzend eine aktive Wegmesseinrichtung und mindestens Teile einer Stillstands- und/oder Notstopp-Erkennungseinrichtung, wie sie auch sonst bei Rollladenantrieben bekannt ist. Hierfür ist die erste Antriebsbaueinheit mit entsprechenden Sensoren ausgestattet, die die Rotation der Wickelwelle beziehungsweise deren Stillstand erfassen. Die Daten der Sensoren werden an die Steuereinheit übermittelt und ausgewertet, die darauf basierende Steuersignale unmittelbar an den Master-Motor und damit mittelbar an den Slave-Motor weiterleitet. Der Slave-Motor kann zwar ebenfalls mit den entsprechenden Sensoren ausgestattet sein, jedoch sind diese in aller Regel nicht aktiv in dem Sinne, dass deren Messdaten an die gemeinsame Steuereinheit weitergeleitet und zur Steuerung ausgewertet werden.

Der Betrieb der Motoren von erster und zweiter Antriebsbaueinheit erfolgt gemäß der Erfindung synchron. Daher ist eine Betriebsweise nicht bevorzugt, bei der eine Vorrichtung zur fortlaufenden Erfassung der Stromaufnahme des Master-Motors vorgesehen ist, und bei der die Steuereinheit einen Speicher umfasst, in dem ein Grenzwert für diese Stromaufnahme gespeichert ist, wobei der Slave-Motor erst dann in Betrieb gesetzt wird, wenn der Grenzwert überschritten ist, und außer Betrieb gesetzt wird, wenn der Grenzwert unterschritten ist. Der Slave-Motor ist bei dieser Ausführungsform außer Betrieb, solange die Stromaufnahme des Master-Motors unterhalb eines vorgegebenen Grenzwertes liegt. In dieser Betriebsphase ist der Slave-Motor von der Wickelwelle mechanisch entkoppelt. Die elektrische Verbindung zwischen den beiden Motoren und der Steuereinheit ist in diesem Fall so ausgeführt, dass erst bei Überschreiten des Grenzwertes der Stromaufnahme der Slave-Motor aktiviert wird und dabei gleichzeitig die mechanische Kopplung zur Wickelwelle hergestellt wird.

Vorzugsweise sind die erste Antriebsbaueinheit und die zweite Antriebsbaueinheit baugleich.

Die Antriebsbaueinheiten sind somit für eine Montage linksseitig der Wickelwelle und für eine Montage rechtsseitig der Wickelwelle geeignet. Die Baugleichheit verringert den Fertigungsaufwand und die Kosten für die Lagerhaltung. Denn es ist nicht erforderlich Antriebsbaueinheiten für linksseitige Montage und Antriebsbaueinheiten für die rechtsseitige Montage bereitzuhalten. Lediglich die Drehrichtung der Motoren im gemeinsamen Betrieb ist unterschiedlich, was aber durch den elektrischen Anschluss oder eine Steuerung einfach bewerkstelligt werden kann.

Es hat sich als besonders günstig erwiesen, wenn die Motoren von erster und zweiter Antriebsbaueinheit für eine nominale Leistungsaufnahme von 24 Volt Gleichstrom ausgelegt sind.

Derartige Motoren zeichnen sich durch eine vergleichsweise kompakte Bauweise bei gleichzeitig relativ hoher Antriebsleistung aus.

In diesem Zusammenhang hat es sich besonders bewährt, wenn die Steuereinheit mit einer Spannungsquelle verbunden ist, und dass sie ein Schaltnetzteil für die Erzeugung von 24 Volt Gleichstrom aufweist.

Hierbei wird der Gleichstrom zum Betreiben der Motoren mittels des Schaltnetzteils der Steuereinheit aus 230 Volt-Netzspannung erzeugt. Die Steuereinheit ist somit mit 230 Volt-Netzspannung verbunden, jedoch nicht die Antriebsbaueinheiten. Daher können die Antriebsbaueinheiten auch von Laien gefahrlos installiert werden. Durch den Einsatz eines Schaltnetzteils ergibt sich gegenüber einem Transformator eine geringere Bauhöhe.

Es hat sich besonders bewährt, wenn die Antriebsbaueinheiten jeweils ein als Metalldruckgussteil ausgeführtes Gehäuse zur Aufnahme von Motor und Untersetzungsgetriebe aufweisen, wobei das Gehäuse im Bereich der Aufnahme des Motors eine Aussparung aufweist, durch die der Motor nach außen ragt.

Im Gehäuse sind Lager für Motor und Getriebeteile vorgesehen, die starken Belastungen während des Betriebes unterliegen können. Durch die Ausführung des Gehäuses als Metalldruckgussteil wird auch nach langem Betrieb ein Ausschlagen der Lager vermieden und eine sichere Funktion gewährleistet. In der Regel handelt es sich um ein Gehäuse aus Aluminium- oder Zinkdruckguss.

Das Gehäuse ist üblicherweise möglichst flach ausgebildet, so dass es in jedem Fall in den Spalt zwischen dem seitlichen Ende des Rollladenpanzers oder einer etwaigen Führungsschiene und der Wandung des Rollladenkastens beziehungsweise einer vorhandenen Wandausnehmung passt. Die Gehäusewandung ist im Bereich der Motoraufnahme mit einer Öffnung versehen, die an die Außenabmessungen des Motors angepasst ist. Die Öffnung kann auf nur einer Seite der Gehäusewandung vorgesehen sein, oder es sind entsprechende Öffnungen auf gegenüberliegenden Gehäuseseiten vorhanden. Dadurch ist es möglich, dass der Motor einseitig oder auf zwei Seiten aus dem Gehäuse-Innenraum herausragen kann. Vorzugsweise schließt er dabei bündig mit der Außenwand des Gehäuses ab. Da das Gehäuse den Motor dabei nicht vollständig umschließen muss, kann die Gehäuse-Höhe etwas schmaler ausgeführt sein (etwa entsprechend der zweifachen Dicke der Gehäusewand).

Bei der Antriebs- und Steuereinrichtung gemäß der Erfindung umfasst das Untersetzungsgetriebe vorzugsweise ein Schneckengetriebe.

Schneckengetriebe zeichnen sich durch ihre Selbsthemmung aus, so dass beim erfindungsgemäßen Direktantrieb im Gegensatz zu Rohrmotoren keine zusätzliche Einrichtung zum Halten des Rollladenpanzers bei abgeschaltetem Motor erforderlich ist. Die beiden Motoren des Direktantriebs sind daher mechanisch und schlüssig mit der Wickelwelle verbunden, wobei die beiderseits vorgesehenen Schneckengetriebe zum Ziehen und zum Halten des Rollladenpanzers beitragen.

Bei einer besonders bevorzugten Ausführungsform der erfindungsgemäßen Antriebs- und Steuereinrichtung ist vorgesehen, dass die Antriebsbaueinheiten jeweils ein Sensormodul zur Erfassung der Drehbewegung und/oder der Stromaufnahme des Motors aufweisen, das über eine Datenbusleitung mit der Steuereinheit verbunden ist.

Über die Datenbusleitungen erhält die Steuereinheit fortlaufend Informationen über den Betriebszustand des Motors, wie etwa über die Drehzahl oder die aktuelle Stromaufnahme. Die prozessorgesteuerte Übermittlung der Daten als verifizierbare Datenpakete in einem Datenbus ist wenig störanfällig.

Es hat sich als vorteilhaft erwiesen, wenn das Sensormodul über die Datenbusleitung mit Strom versorgt wird, und wenn es auch ein Nachlaufen des Motors nach dem Abschalten erfasst, so dass die von dem Sensormodul erfassten Daten über das Nachlaufen der gemeinsamen Steuereinheit über die Datenbusleitung übermittelt werden.

Nach dem Abschalten des Motors ist dieser spannungsfrei, kann aber noch ein Stück nachlaufen. Dadurch, dass das Sensormodul über die Datenbusleitung weiterhin mit Strom versorgt wird, können die entsprechenden Daten über das Nachlaufen des Motors erfasst und bei der Wegmessung für den Rollladenpanzer berücksichtigt werden.

Der Verkabelungsaufwand wird reduziert, wenn die Datenbusleitung zusammen mit einer Stromleitung zum Motor in einem gemeinsamen Sonderkabel verlegt ist.

Die erfindungsgemäße Antriebs- und Steuereinheit ist sowohl für die Nachrüstung vorhandener Rollläden und dergleichen als auch für die Neuinstallation geeignet.

Ein Ausführungsbeispiel der Erfindung ist in der Zeichnung dargestellt und wird nachfolgend näher erläutert. In schematischer Darstellung zeigt im Einzelnen
- **Figur 1**: eine Ausführungsform einer Antriebs- und Steuereinrichtung gemäß der Erfindung, und
- **Figur 2**: eine Detailansicht einer Antriebsbaueinheit in einer Draufsicht in Richtung der Wickelwelle bei abgenommenem Gehäusedeckel.

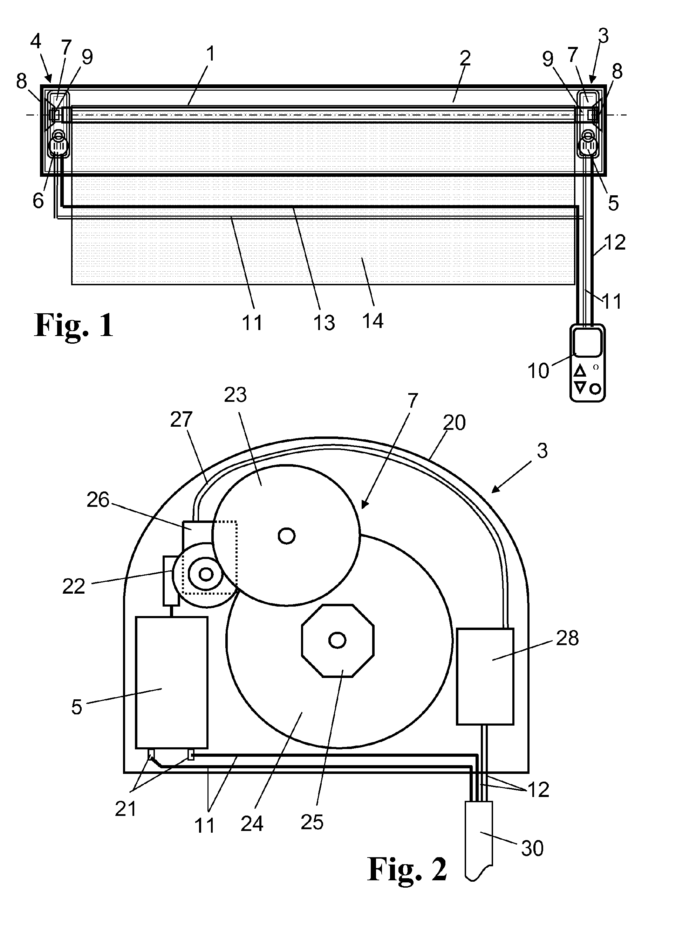

In **Figur 1** ist schematisch eine Ausführungsform der Antriebs- und Steuereinrichtung mit beidseitigem Direktantrieb der Wickelwelle 1 eines Rollladens 14 dargestellt. Die Wickelwelle 1 besteht aus einem Achtkant-Aluminiumprofil mit der handelsüblichen Schlüsselweite von 60 mm. Sie ist zwischen zwei stirnseitigen Endlagern innerhalb eines Rollladenkastens 2 reversierend rotierbar gelagert.

Die beidseitigen Endlager der Wickelwelle 1 werden von Antriebsbaueinheiten 3 und 4 gebildet, die jeweils an einer der Stirnseiten der Wickelwelle 1 angreifen. Beide Antriebsbaueinheiten 3, 4 sind baugleich und weisen einen 24 V-Gleichspannungsmotor 5, 6, ein mit dem Motor 5, 6 in Verbindung stehendes Untersetzungsgetriebe 7, ein Wandlager 8 und einen Adapter 9 für die Wickelwelle 1 auf. Die Antriebsbaueinheiten 3, 4, die anhand Figur 2 noch näher erläutert werden, stellen in dem vorgegebenen engen Bauraum zwischen den Seitenflanken des Rollladens 14 und der Stirnwand des Rollladenkastens 2 eine möglichst hohe Antriebsleistung für die Wickelwelle 1 zur Verfügung.

Die Motoren 5, 6 sind elektrisch parallel geschaltet und so gepolt, dass sie bei Betrieb in entgegengesetzten Richtungen drehen und somit die Wickelwelle 1 gleichsinnig rotieren.

Außerdem sind die Motoren 5, 6 hierarchisch in einer Master/Slave-Schaltung organisiert. Hierzu ist eine Steuer- und Bedieneinheit 10 vorgesehen, die mit 230 V-Netzspannung verbunden ist, aus der mittels eines Schaltnetzteils eine Betriebsspannung von 24 V und eine Steuerspannung von 5 V erzeugt werden. Die 24 V-Betriebsspannung wird über Stromversorgungsleitungen 11 an die beiden parallel geschalteten Motoren 5, 6 übertragen, und die 5 V-Steuerspannung über eine Steuerleitung 12 an den Motor 5 und über eine Datenleitung 13 an den Motor 6. Der Motor 5 dient als Master-Motor der Master/Slave-Schaltung und der Motor 6 als Slave-Motor.

Über die Steuerleitung 12 werden Steuersignale betreffend das Ein- und Ausschalten an den Master-Motor 5 übermittelt. Außerdem werden Messdaten betreffend die Drehzahl und die Stromaufnahme des Master-Motors 5 über die Steuerleitung 12 an die Steuereinheit 10. übermittelt. Über die Datenleitung 13 werden ebenfalls Messdaten betreffend die Drehzahl und die Stromaufnahme des Slave-Motors 6 übermittelt. Die Stromaufnahmen der beiden Motoren 5, 6 werden in der Steuereinheit 10 laufend ausgewertet und regelungstechnisch angeglichen. Die Steuersignale für die Drehzahl werden über die Steuerleitung 12 beziehungsweise über die Datenleitung 13 an die betreffenden Antriebsbaueinheiten 3, 4 übermittelt. Steuerleitung 12 und Datenleitung 13 sind als Datenbusleitungen ausgeführt, das bedeutet, dass beiderseits der Leitungen Prozessoren vorgesehen sind, welche über die Datenbusleitungen (12, 13) kommunizieren.

Die zum Master-Motor 5 gehörende Antriebsbaueinheit 3 ist mit Hall-Sensoren zur Erfassung der Motordrehbewegung versehen. Die Sensorsignale werden über die Steuerleitung 12 an die Steuereinheit 10 übermittelt und ausgewertet. Schaltsignale zum Ein- und Ausschalten werden von der Steuereinheit 10 unmittelbar und nur an den Master-Motor 5 übermittelt, was in Verbindung mit der Parallelschaltung der Motoren 5, 6 zu einem Synchronbetrieb der Motoren 5, 6 führt.

Das Steuer- und Bedienteil 10 besteht aus einem über einer handelsüblichen Unterputzdose an der Wand befestigten Halter, über den der elektrische Anschluss zur 230 V-Netzspannung erfolgt und der von einem Bedienteil abgedeckt ist, das die gesamte Steuerungselektronik und neben den Tasten für die manuelle Steuerung des Motoren 5, 6 auch einen Funksensor für eine Funk-Fernbedienung beinhaltet. Die Steuerungselektronik beinhaltet einen Mikroprozessor mit permanentem Datenspeicher, in dem unter anderem die obere und die untere Endlage des Rollladenpanzers gespeichert werden. Alternativ dazu kann der elektrische Anschluss zur 230 V-Netzspannung auch direkt über das Steuer- und Bedienteil 10erfolgen, beispielsweise, indem das Steuer- und Bedienteil 10 mit einem Netzstecker versehen wird.

**Figur 2** zeigt eine Innenansicht der Antriebsbaueinheit 3 bei abgenommener Gehäuseabdeckung. Das gegen Spritzwasser geschützte Gehäuse 20 (gemäß IP 44 der DIN EN 60529) besteht aus Zink-Druckguss. Figur 2 zeigt eine Draufsicht auf die der Wickelwelle zugewandte Vorderseite des Gehäuses 20. Mit seiner Rückseite ist das Gehäuse 20 an der Seitenwand eines Rollladenkastens verdrehsicher gelagert.

Innerhalb des Gehäuses 20 sind der elektrische Gleichspannungsmotor 5 für 24 Volt mit Stromanschlüssen 21 sowie ein Untersetzungsgetriebe 7 angeordnet. Das Untersetzungsgetriebe 7 ist selbsthemmend und umfasst eine Anzahl von Getriebeteilen, wie eine Antriebsschnecke 22 und mehrere Zahnräder 23 einschließlich eines Antriebszahnrades 24 mit einem Adapter 25 für die Wickelwelle.

Der Adapter 25 ist an die Wickelwellengröße angepasst, wobei Größen ab 30 mm (Schlüsselweite) standardisiert sind. Der Durchmesser des Antriebszahnrades 24 beträgt 100 mm und ist daher größer als der Durchmesser der größten in Frage kommenden Wickelwelle 1 (Figur 1), so dass sich ein günstiges Hebelverhältnis für die Kraftübertragung vom Motor 5 ergibt.

Die Höhe des Gehäuses 20 (ohne Adapter) beträgt 25 mm und entspricht dabei genau dem Außendurchmesser des Motors 5. Um dies zu erreichen, sind die Gehäuseabdeckung und die der Befestigungswandung zugewandte Rückseite des Gehäuses 20 jeweils mit Durchbrüchen versehen, deren Größe an die Abmessungen der Zylindermantelfläche des Motors 5 angepasst ist. Die betreffende Zylindermantelfläche ragt durch die Durchbrüche beiderseits nach außen und schließt mit der Gehäuserückwand beziehungsweise mit der Gehäuseabdeckung bündig ab. Durch die geringe Bauhöhe des Gehäuses 20 ist die Antriebsbaueinheit auch für Vorbau- und Aufbaurollläden geeignet, bei denen üblicherweise besonders wenig Raum für eine seitliche Anbringung eines Rollladenantriebs zur Verfügung steht.

Die Stromversorgung für den Motor 5 erfolgt über die Stromanschlüsse 21 und die Stromleitung 11, die mit dem Steuer- und Bedienteil 10 (siehe Fig. 1) verbunden ist. Zur Erfassung der Drehbewegung des Motors 5 eine Erfassungseinrichtung mit einem (nicht dargestellten) Hall-Sensor auf einer Sensorplatine 26 vorgesehen. Die vom Hall-Sensor abgegebenen Zählimpulse werden einer Zähleinrichtung zugeführt, die je nach Bewegungsrichtung aufwärts oder abwärts zählt, so dass der jeweilige Zählerstand ein Maß für die Position des Rollladenpanzers ist. Die Sensorplatine 26 ist über eine Datenleitung 27 mit einer weiteren Platine 28 verbunden, die einen Prozessor und eine Elektronik zum Verstärken der Signale des Hall-Sensors trägt. Von der Platine 28 geht die als Datenbusleitung ausgeführte Steuerleitung 12 zum Steuer- und Bedienteil 10 (siehe Fig. 1). Steuerleitung 12 und Stromleitung 11 sind dabei in einem Sonderkabel 30 kombiniert.

## Patentansprüche

1. Antriebs- und Steuereinrichtung für Rollläden und dergleichen mit einer reversierend rotierbaren Wickelwelle (1), mit einem außerhalb der Wickelwelle (1) angeordneten Direktantrieb, der eine erste Antriebsbaueinheit (3) und eine zweite Antriebsbaueinheit (4) umfasst, wobei die Antriebsbaueinheiten (3; 4) mit einer gemeinsamen Steuereinheit (10) verbunden sind und jeweils mindestens einen Gleichspannungs-Motor (5; 6) und ein mit dem Motor (5; 6) in Antriebsverbindung stehendes Untersetzungsgetriebe (7) aufweisen, wobei die erste Antriebsbaueinheit (3) im Bereich des einen stirnseitigen Endes der Wickelwelle (1) und die zweite Antriebsbaueinheit (4) im Bereich des anderen stirnseitigen Endes der Wickelwelle (1) angreift und wobei die Motoren (5; 6) von erster und zweiter Antriebsbaueinheit bei Betrieb die Wickelwelle (1) gleichsinnig und synchron rotieren.

2. Antriebs- und Steuereinrichtung nach Anspruch 1, **dadurch gekennzeichnet, dass** zur Synchronisation der Drehzahlen der Motoren (5; 6) von erster und zweiter Antriebsbaueinheit eine Synchronisationseinrichtung vorgesehen ist, die eine Messeinrichtung (26, 28; 10) für die fortwährende Messung der von den Motoren (5; 6) aufgenommenen Betriebsströme und eine Regeleinrichtung umfasst, mittels der die Betriebsströme auf ein gemeinsames Niveau eingeregelt werden.

3. Antriebs- und Steuereinrichtung nach Anspruch 1 oder 2, **dadurch gekennzeichnet, dass** die Motoren (5; 6) von erster und zweiter Antriebsbaueinheit elektrisch parallel geschaltet sind.

4. Antriebs- und Steuereinrichtung nach einem der vorhergehenden Ansprüche, **dadurch gekennzeichnet, dass** die Steuereinheit (10) eine hierarchische Master/Slave-Steuerungsorganisation umfasst, wobei der Motor (5) der ersten Antriebsbaueinheit (3) als Master-Motor und der Motor (6) der zweiten Antriebsbaueinheit (4) als Slave-Motor organisiert sind.

5. Antriebs- und Steuereinrichtung nach Anspruch 4, **dadurch gekennzeichnet, dass** die erste Antriebsbaueinheit (3) mit einer Erfassungseinrichtung (26; 28) zur Wegmessung, zum Stillstand und/oder Notstopp ausgestattet ist, und dass die Steuereinheit (10) mit der ersten Antriebsbaueinheit (3) über eine Steuerleitung (12) verbunden ist, über die Mess- und Steuerdaten der Erfassungseinrichtung (26; 28) übertragen werden.

6. Antriebs- und Steuereinrichtung nach einem der vorhergehenden Ansprüche, **dadurch gekennzeichnet, dass** die erste Antriebsbaueinheit (3) und die zweite Antriebsbaueinheit (4) baugleich sind.

7. Antriebs- und Steuereinrichtung nach einem der vorhergehenden Ansprüche, **dadurch gekennzeichnet, dass** die Motoren (5; 6) von erster und zweiter Antriebsbaueinheit für eine nominale Leistungsaufnahme von 24 Volt Gleichstrom ausgelegt sind.

8. Antriebs- und Steuereinrichtung nach Anspruch 7, **dadurch gekennzeichnet, dass** die Steuereinheit (10) mit einer Spannungsquelle verbunden ist und ein Schaltnetzteil für die Erzeugung von 24 Volt Gleichstrom aufweist.

9. Antriebs- und Steuereinrichtung nach einem der vorhergehenden Ansprüche, **dadurch gekennzeichnet, dass** die Antriebsbaueinheiten (3; 4) jeweils ein als Metalldruckgussteil ausgeführtes Gehäuse (20) zur Aufnahme von Motor (5; 6) und Untersetzungsgetriebe (7) aufweisen, wobei das Gehäuse (20) im Bereich der Aufnahme des Motors (5; 6) eine Ausnehmung aufweist, durch die der Motor (5; 6) nach außen ragt.

10. Antriebs- und Steuereinrichtung nach einem der vorhergehenden Ansprüche,
**dadurch gekennzeichnet, dass** das Untersetzungsgetriebe (7) ein selbsthemmendes Schneckengetriebe (22) umfasst.

11. Antriebs- und Steuereinrichtung nach einem der vorhergehenden Ansprüche, **dadurch gekennzeichnet, dass** die Antriebsbaueinheiten (3; 4) jeweils ein Sensormodul (26; 28) zur Erfassung der Drehbewegung und/oder der Stromaufnahme des Motors (5; 6) aufweisen, das über eine Datenbusleitung (12) mit der Steuereinheit (10) verbunden ist.

12. Antriebs- und Steuereinrichtung nach Anspruch 11, **dadurch gekennzeichnet, dass** das Sensormodul (26; 28) über die Datenbusleitung (12) mit Strom versorgt wird und dass es ein Nachlaufen des Motors (5; 6) nach dem Abschalten erfasst, und dass die von dem Sensormodul (26; 28) erfassten Daten über das Nachlaufen der gemeinsamen Steuereinheit (10) über die Datenbusleitung (12) übermittelt werden.

13. Antriebs- und Steuereinrichtung nach Anspruch 11 oder 12, **dadurch gekennzeichnet, dass** die Datenbusleitung (12) zusammen mit einer Stromleitung (11) zum Motor (5; 6) in einem gemeinsamen Sonderkabel (30) verlegt ist.
